# EUROPÄISCHE PATENTANMELDUNG

(11) **EP 2 075 902 A2**
(43) Veröffentlichungstag der Anmeldung: **01.07.2009**
(21) Anmeldenummer: 08105739.0
(22) Anmeldetag: 06.11.2008
(51) Int. Cl.: H02M 3/335

(54) **Schaltnetzteil und Verfahren zum Betreiben eines Schaltnetzteils**

(30) Priorität: 27.12.2007 DE 102007062728
(71) Anmelder: Robert Bosch GmbH, 70442 Stuttgart (DE)
(72) Erfinder: Mack, Juergen, 73035, Goeppingen (DE)

(57) **Zusammenfassung**

Die vorliegende Erfindung betrifft ein Schaltnetzteil (10) mit folgenden Merkmalen:
- einem Transformator(12), der primärseitig eine Primärwicklung (14) zur Leistungsaufnahme und sekundärseitig eine Sekundärwicklung (16) zur Leistungsabgabe sowie eine Hilfswicklung (18) zur Ausgabe einer Hilfsspannung (U_{Hilf}) aufweist; und
- einer Koppeleinheit (20), die ausgebildet ist, um die Sekundärwicklung (16) und die Hilfswicklung (18) derart zu koppeln, dass ein Energietransport (22) von der Sekundärwicklung (16) zur Hilfswicklung (18) ermöglicht und ein Energietransport von der Hilfswicklung (18) in die Sekundärwicklung (16) verhindert wird.

## Beschreibung

### Technisches Gebiet

Die vorliegende Erfindung bezieht sich auf ein Schaltnetzteil gemäß Anspruch 1 sowie ein Verfahren zum Betreiben eines Schaltnetzteils gemäß Anspruch 8.

### Stand der Technik

Schaltnetzteile (kurz SNT's), wie sie zum Beispiel in Ladegeräten eingesetzt werden, benötigen im Betrieb eine Hilfsspannung. Diese Hilfsspannung versorgt die Reglerkomponenten und gegebenenfalls einen Mikrocontroller.

Die Hilfsspannungsversorgung in Schaltnetzteilen wird in der Regel über eine zusätzlich angebrachte Trafo-Wicklung bereitgestellt. Der Vorteil dieser separaten Wicklung besteht darin, dass bei einem ausgangsseitigen Kurzschluss die Hilfsspannungsversorgung nicht betroffen ist. Bei SNT's, die in einen Bereitschaftsmodus ("stand-by") versetzt oder mit stark reduzierter Ausgangsleistung betrieben werden können, wird eine zusätzliche Spannungsversorgung benötigt, da die Hilfsspannungswicklung nicht mehr genügend Energie bereitstellen kann. Dies ist jedoch mit hohen Kosten verbunden.

Es ist daher die Aufgabe der vorliegenden Erfindung, eine kostengünstigere Möglichkeit zur zuverlässigen Bereitstellung einer ausreichend hohen Hilfsspannung zu schaffen.

### Offenbarung der Erfindung

Diese Aufgabe wird durch ein Schaltnetzteil mit den Merkmalen des Anspruchs 1 sowie durch ein Verfahren zum Betreiben eines Schaltnetzteils mit den Schritten des Anspruchs 8 gelöst. Weitere Ausführungsformen der Erfindung ergeben sich aus den abhängigen Patentansprüchen.

Die vorliegende Erfindung schafft ein Schaltnetzteil mit folgenden Merkmalen:
- einem Transformator, der primärseitig eine Primärwicklung zur Energieaufnahme und sekundärseitig eine Sekundärwicklung zur Energieabgabe sowie eine Hilfswicklung zur Ausgabe einer Hilfsspannung aufweist; und
- einer Koppeleinheit, die ausgebildet ist, um die Sekundärwicklung und die Hilfswicklung derart zu koppeln, dass ein Energietransport von der Sekundärwicklung zur Hilfswicklung ermöglicht wird und ein Energietransport von der Hilfswicklung in die Sekundärwicklung verhindert wird.

Die vorliegende Erfindung basiert auf der Erkenntnis, dass eine einfache Möglichkeit zum sicheren und zuverlässigen Bereitstellen der Hilfsspannung durch eine Kopplung zwischen der Sekundärwicklung und der Hilfswicklung erreichbar ist, bei der lediglich ein Energiefluss von der Sekundärwicklung zur Hilfswicklung ermöglicht wird. Ein Energiefluss von der Hilfswicklung zur Sekundärwicklung wird dagegen unterbunden. Hierbei wird bei einem Absinken der Leistungsabgabe durch die Sekundärwicklung (z.B. einem ausgangsseitigen Kurzschluss) sichergestellt, dass durch die Energieübertragung in die Hilfswicklung noch eine ausreichend hohe Hilfsspannung ausgegeben werden kann. Durch diese, von der Sekundärwicklung an die Hilfswicklung abgegebene Mindestleistung bzw. -energie kann auch bewirkt werden, dass die Sekundärwicklung immer eine gewisse Restbelastung erfährt, so dass bei geeigneter Dimensionierung der Hilfswicklung des Transformators und der Koppeleinheit auch die ausreichende Höhe der Hilfsspannung sichergestellt ist.

Der erfindungsgemäße Ansatz bietet den Vorteil, dass nunmehr durch eine sehr einfache Schaltungstopologie eine deutliche Verbesserung in der Robustheit der Bereitstellung einer ausreichend hohen Hilfsspannung möglich wird. Gegenüber Lösungen aus dem Stand der Technik führt dies zu kostengünstigeren Schaltnetzteilen. Weiterhin kann auch durch die Kopplung eine ansonsten erforderliche Grundlast in Form eines Mindestwiderstandes über die Anschlüsse der Sekundärwicklung entfallen. Im Betrieb des Schaltnetzteils führt das Entfallen eines solchen Mindestwiderstandes zu einer Verringerung der Verlustenergie und dadurch auch zu geringeren Betriebskosten wegen des geringeren Energiebedarfs des vorgeschlagenen Schaltnetzteils gegenüber herkömmlichen Schaltnetzteilen.

Gemäß einer Ausführungsform der vorliegenden Erfindung umfasst die Koppeleinheit eine Diode. Dies bietet die Möglichkeit, durch ein einfaches schaltungstechnisches Bauelement eine Einweg-Energieübertragung von der Sekundärwicklung zur Hilfswicklung zu ermöglichen, wodurch sich das Schaltnetzteil gemäß dieser Ausführungsform sehr kostengünstig herstellen lässt.

Günstig ist es auch, wenn die Diode derart gepolt ist, dass ihre Anode mit der Sekundärwicklung und ihre Kathode mit der Hilfswicklung gekoppelt ist. Insbesondere dann, wenn die an den Anschlüssen der Hilfswicklung (bezogen auf ein Massepotential) abgreifbare Spannung unter eine an den Anschlüssen der Sekundärwicklung (ebenfalls bezogen auf das Massepotential) abgreifbare Spannung absinkt, ermöglicht dies die einfache Implementierung der Koppeleinheit, welche die Energie nur in eine Richtung übertragen soll.

In einer anderen Ausführungsform der vorliegenden Erfindung umfasst die Koppeleinheit einen diskreten Widerstand. Dies ermöglicht eine Begrenzung eines Stromflusses von der Sekundärwicklung zur Hilfswicklung, wodurch ein schaltungstechnisch einfacher Überlastschutz gegen eine zu große Energieübertragung von der Sekundärwicklung zur Hilfswicklung realisierbar ist.

Auch kann gemäß einer weiteren Ausführungsform der vorliegenden Erfindung ein erster Anschluss der Koppeleinheit mit einem Anschluss für das positive Potential der Sekundärwicklung verbunden sein und ein zweiter Anschluss der Koppeleinheit mit einem Ausgangsanschluss für die Hilfsspannung der Hilfswicklung verbunden sein. Insbesondere dann, wenn die Hilfsspannung unter das Niveau der Spannung über die Anschlüsse der Sekundärwicklung sinkt, ermöglicht dies durch die Potentialdifferenz zwischen den beiden Anschlüssen die einfache Sicherstellung des Energieflusses von der Sekundärwicklung zur Hilfswicklung und unterstützt das Verhindern des Energie-Rückflusses von der Hilfswicklung zur Sekundärwicklung.

Weiterhin können auch gemäß einer anderen Ausführungsform die Anschlüsse der Sekundärwicklung über eine Kapazität verbunden sein und die Anschlüsse der Hilfswicklung über eine Kapazität verbunden sein. Dies ermöglicht eine Glättung der Ausgangsspannung der Sekundärwicklung als auch der von der Hilfswicklung ausgegebenen Hilfsspannung, wobei dann im Fall des Absinkens der Leistungsabnahme von der Sekundärwicklung lediglich ein Umladen der Kapazität zwischen den Anschlüssen der Sekundärwicklung in die Kapazität erfolgt, die zwischen den Anschlüssen der Hilfswicklung geschaltet ist. Somit erfolgt durch diese Umladung der Kapazitäten bzw. Kondensatoren eine Minimierung des Energieverlusts; dagegen würde durch Entladung diejenige Energie verloren gehen, die in der Kapazität gespeichert war, die zwischen die Anschlüsse der Sekundärwicklung geschaltet ist.

Auch kann in einer anderen günstigen Ausführungsform die Sekundärwicklung einen Anschluss aufweisen, der über ein Massepotential mit einem Anschluss der Hilfswicklung verbunden ist. Dies bietet die Möglichkeit einer schaltungstechnisch sehr einfachen Stromkreisbildung über das Massepotential, so dass die Koppeleinheit im Wesentlichen durch eine einzelne Leitungsverbindung (mit zum Beispiel in Serie geschalteten Bauelementen) zwischen der Sekundärwicklung und der Hilfswicklung möglich wird.

Gemäß einer anderen Ausführungsform der vorliegenden Erfindung ist ein Verfahren zum Betreiben eines Schaltnetzteils vorgesehen, wobei das Schaltnetzteil einen Transformator aufweist, der primärseitig eine Primärwicklung zur Energieaufnahme und sekundärseitig eine Sekundärwicklung zur Energieabgabe sowie eine Hilfswicklung zur Ausgabe einer Hilfsspannung umfasst, wobei das Verfahren folgende Schritte umfasst:
- Reduzieren der Energieabgabe über die Sekundärwicklung; und
- Übertragen von Energie von der Sekundärwicklung zur Hilfswicklung sowie Verhindern einer Energieübertragung von der Hilfswicklung zur Sekundärwicklung.

### Kurze Beschreibung der Zeichnungen

Die Erfindung wird nachstehend anhand der beigefügten Zeichnungen beispielhaft näher erläutert. Es zeigen:
- Fig. 1: ein Blockschaltbild eines Ausführungsbeispiels der vorliegenden Erfindung;
- Fig. 2: eine schematische Schaltskizze eines weiteren Ausführungsbeispiels der vorliegenden Erfindung; und
- Fig. 3: ein Ablaufdiagramm eines Ausführungsbeispiels der vorliegenden Erfindung.

### Beschreibung der Ausführungsformen

Gleiche oder ähnliche Elemente können in den nachfolgenden Figuren durch gleiche oder ähnliche Bezugszeichen versehen sein. Weiterhin sind eventuell angegebene Dimensionen und Maße nur exemplarisch, so dass die Erfindung nicht auf diese Dimensionen und Maße beschränkt ist. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können.

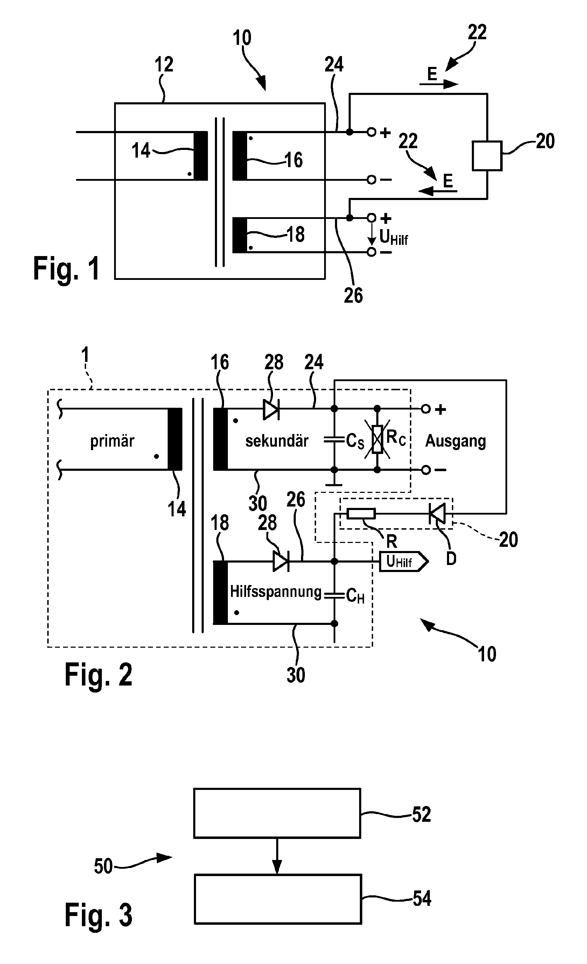

Fig. 1 zeigt ein Blockschaltbild eines Ausführungsbeispiels der vorliegenden Erfindung. Hierbei umfasst das Schaltnetzteil 10 einen Transformator 12, der primärseitig eine Primärwicklung 14 und sekundärseitig eine Sekundärwicklung 16 sowie eine Hilfswicklung 18 umfasst. Ferner umfasst das Schaltnetzteil 10 eine Koppeleinheit 20, die eine Einweg-Energieübertragung 22 von einem ersten Anschluss 24 der Sekundärwicklung 16 zu einem ersten Anschluss 26 der Hilfswicklung 18 ermöglicht. Der ersten Anschluss 24 der Sekundärwicklung 18 kann dabei der Anschluss für das positive Potential für die an der Sekundärwicklung 16 abgreifbaren Spannung sein. Analog kann auch der erste Anschluss 26 der Hilfswicklung 18 der Anschluss des positiven Potentials der an den Anschlüssen der Hilfswicklung 18 abgreifbaren Spannung sein.

Wird nun das Schaltnetzteil betrieben, wird durch die Koppeleinheit 20 die Aufrechterhaltung der Hilfsspannungsversorgung vor allem beim Umschalten in den Bereitschaftsmodus oder einem starken Reduzieren der Ausgangsleistung sichergestellt. Wird nämlich die an der Sekundärwicklung abgegriffene Leistung stark reduziert, würde auch durch die Rückwirkung des Transformators die Leistungsaufnahme an der Primärwicklung stark reduziert, so dass zugleich auch eine starke Reduktion der an der Hilfswicklung abgreifbaren Hilfsspannung zu verzeichnen wäre. Werden jedoch mit der Hilfsspannung Komponenten des Schaltnetzteils (beispielsweise Mikrocontroller oder Regelkomponenten, die auch einen ordnungsgemäßen Betrieb des Schaltnetzteils im "Stand-by"-Modus sicherstellen sollen) betrieben, die auf eine minimale Hilfsspannung angewiesen sind, könnte die korrekte Funktionalität dieser Komponenten nicht gewährleistet werden. Durch die Koppeleinheit 20 wird dagegen sichergestellt, dass ein Energietransfer von der Sekundärwicklung 16 zur Hilfswicklung 18 erfolgt, so dass einerseits die Sekundärwicklung 16 stets (zumindest minimal) belastet wird, so dass ein plötzlicher Abfall der Leistungsabgabe in gewissen Grenzen "abgefangen" werden kann.

Andererseits wird auch durch den Energietransfer von der Sekundärwicklung 16 zur Hilfswicklung 18 über die Koppeleinheit 20 ermöglicht, dass die Hilfsspannung U_{Hilf} auch bei einem Abfall der Leistungsabgabe von der Sekundärwicklung 16 noch in ausreichender Höhe sichergestellt werden kann. Durch die Verwendung einer sehr einfachen Schaltung als Koppeleinheit 20 werden zugleich eine sehr geringe Ausfallrate sowie geringe Realisierungskosten erzielt.

Die wesentlichen Vorteile der Erfindung sind vor allem die simple Schaltungstopologie, ein hierzu notwendiger geringer Bauteilaufwand und minimale Zusatzkosten. Des Weiteren wird die Redundanz der Hilfsspannungsversorgung erhöht. Die für einen einwandfreien Betrieb eines eingesetzten Reglers notwendige Grundlast an der Sekundärwicklung kann entfallen, womit eine zusätzliche Kostenoptimierung erzielt wird.

In Fig. 2 ist eine schematische Skizze eines weiteren Ausführungsbeispiels der vorliegenden Erfindung dargestellt, wobei vor allem ein detaillierter Aufbau der Koppeleinheit 20 dargestellt ist. Gegenüber der Fig. 1 sind ferner Gleichrichterdioden 28 zur Sicherstellung eines Gleichstromes in den Kreisen der Sekundär- und Hilfswicklung 16 bzw. 18 vorgesehen. Ferner gibt Fig. 2 einen schematischen Detailausschnitt eines SNT 10 mit einem Transformator wieder. Im normalen Betrieb wird die Hilfsspannung U_{Hilf} über die Hilfswicklung 18 bereitgestellt. Wird nun die Ausgangsleistung schlagartig reduziert, so wird über die direkte Kopplung der Hilfswicklung 18 mit der Sekundärwicklung 16 ebenfalls die Energieübertragung von der Primärwicklung 14 zur Hilfswicklung 18 reduziert. Dies führt zu einem nicht gewünschten Verhalten der Regler und/oder des Mikrocontrollers.

Abhilfe schafft hier die gemäß diesem Ausführungsbeispiel vorgesehene Verbindung zwischen der Ausgangs- und der Hilfsspannung mit der Koppeleinheit 20, die in einer Serienschaltung aus einer Diode D und einem Widerstand R implementiert ist (wie dies auch in Fig. 2 dargestellt ist). Die Funktion dieser Serienschaltung lässt sich wie folgt erklären:
Sinkt die Hilfsspannung unter das Niveau der Ausgangsspannung, so wird der Pufferkondensator C_{H}, der zwischen die Anschlüsse der Hilfswicklung 18 geschaltet ist, über die Diode D und den Widerstand R der Koppeleinheit 20 aufgeladen. Somit kann die Hilfsspannung nie kritische Minimalwerte annehmen und die Funktionstüchtigkeit des SNT 10 beeinträchtigen. Der vorstehend genannte Energietransport kann dann in Form eines Stromflusses über die Diode D und den Widerstand R erfolgen. Dabei kann insbesondere eine einfache Umladung der Ladung des zur Spannungsglättung vorgesehenen Sekundärwicklungskondensators C_{S} (der zwischen die Anschlüsse der Sekundärwicklung geschaltet ist) in den Hilfswicklungskondensator (oder Pufferkondensator) C_{H} erfolgen, so dass durch die Umladung gegenüber einer Entladung ein Energieverlust minimiert werden kann. Der Hilfswicklungskondensator C_{H} ist dabei ebenfalls zur Glättung der Hilfsspannung gegen Schwankungen der Energieübertragung des Transformators in die Hilfswicklung vorgesehen. Diese Umladung stellt dabei eine Belastung für den Ausgangs- oder Sekundärwicklungskreis dar, weswegen auf eine Grundlast R_{G} zwischen den Anschlüssen der Sekundärwicklung verzichtet werden kann (was in Fig. 2 durch einen durchgestrichenen Widerstand R_{G} gekennzeichnet ist). Eine solche Grundlast ist gemäß dem Stand der Technik als Mindestwiderstand ausgebildet. Hierdurch wird mit dem vorgeschlagenen Ansatz eine weitere Kostenreduktion für den Betrieb des Schaltnetzteils möglich, da die Mindestverlustleistung und damit die Energieverluste (auch während des "Stand-by"-Modus) des Schaltnetzteils reduziert werden können. Da der Energietransport zwischen dem Ausgangskreis und der Hilfsspannungsversorgung stattfindet, wird der Wirkungsgrad der Anordnung somit zusätzlich verbessert. Durch die gemeinsame Masseverbindung 30 zwischen dem zweiten Anschluss der Sekundärwicklung 16 und dem zweiten Anschluss der Hilfswicklung 18 wird auch ermöglicht, dass der Energietransport lediglich durch eine Leitung zwischen den ersten Anschlüssen 24 und 26 der Sekundär- und Hilfswicklung 16 bzw. 18 erfolgt. Hierdurch wird auch der schaltungstechnische Aufwand minimiert.

Fig. 3 zeigt ein Ablaufdiagramm eines Ausführungsbeispiels der vorliegenden Erfindung als Verfahren 50. Es ist ein Transformator mit primärseitig einer Primärwicklung und sekundärseitig einer Sekundär- und einer Hilfswicklung vorgesehen. Wird in einem ersten Schritt 52 eine Leistungsabnahme über die Sekundärwicklung reduziert, kann in einem zweiten Schritt 54 ein Übertragen von Energie von der Sekundärwicklung zur Hilfswicklung sowie ein Verhindern einer Energieübertragung von der Hilfswicklung zur Sekundärwicklung erfolgen, um die Hilfsspannung ausreichend hoch zu halten.

## Patentansprüche

1. Schaltnetzteil (10) mit folgenden Merkmalen:
- einem Transformator (12), der primärseitig eine Primärwicklung (14) zur Energieaufnahme und sekundärseitig eine Sekundärwicklung (16) zur Energieabgabe sowie eine Hilfswicklung (18) zur Ausgabe einer Hilfsspannung (U_{Hilf}) aufweist; und
- einer Koppeleinheit (20), die ausgebildet ist, um die Sekundärwicklung (16) und die Hilfswicklung (18) derart zu koppeln, dass ein Energietransport (22) von der Sekundärwicklung (16) zur Hilfswicklung (18) ermöglicht und ein Energietransport von der Hilfswicklung (18) in die Sekundärwicklung (16) verhindert wird.

2. Schaltnetzteil (10) gemäß Anspruch 1, **dadurch gekennzeichnet, dass** die Koppeleinheit (20) eine Diode (D) umfasst.

3. Schaltnetzteil (10) gemäß Anspruch 2, **dadurch gekennzeichnet, dass** die Diode (D) derart gepolt ist, dass ihre Anode mit der Sekundärwicklung (16) und ihre Kathode mit der Hilfswicklung (18) gekoppelt ist.

4. Schaltnetzteil (10) gemäß einem der vorhergehenden Ansprüche, **dadurch gekennzeichnet, dass** die Koppeleinheit (20) einen diskreten Widerstand (R) umfasst.

5. Schaltnetzteil (10) gemäß einem der vorhergehenden Ansprüche, **dadurch gekennzeichnet, dass** ein erster Anschluss der Koppeleinheit (20) mit einem Anschluss (24) für das positive Potential der Sekundärwicklung (16) verbunden ist und ein zweiter Anschluss der Koppeleinheit mit einem Ausgangsanschluss (26) für die Hilfsspannung (U_{Hilf}) der Hilfswicklung (18) verbunden ist.

6. Schaltnetzteil (10) gemäß einem der vorhergehenden Ansprüche, **dadurch gekennzeichnet, dass** die Anschlüsse (24, 38) der Sekundärwicklung (18) über eine Kapazität (C_{S}) verbunden sind und die Anschlüsse (26, 38) der Hilfswicklung (18) über eine Kapazität (C_{H}) verbunden sind.

7. Schaltnetzteil (10) gemäß einem der vorhergehenden Ansprüche, **dadurch gekennzeichnet, dass** die Sekundärwicklung (16) einen Anschluss aufweist, der über ein Massepotential (30) mit einem Anschluss der Hilfswicklung (18) verbunden ist.

8. Verfahren (50) zum Betreiben eines Schaltnetzteils, wobei das Schaltnetzteil einen Transformator aufweist, der primärseitig eine Primärwicklung zur Energieaufnahme und sekundärseitig eine Sekundärwicklung zur Energieabgabe sowie eine Hilfswicklung zur Ausgabe einer Hilfsspannung umfasst, wobei das Verfahren (50) folgende Schritte umfasst:
- Reduzieren (52) der Energieabgabe über die Sekundärwicklung; und
- Übertragen (54) von Energie von der Sekundärwicklung zur Hilfswicklung sowie Verhindern einer Energieübertragung von der Hilfswicklung zur Sekundärwicklung.
